# FASCICULE DE BREVET EUROPEEN

(11) **EP 2 285 455 B1**
(45) Date de publication et mention de la délivrance du brevet: **25.04.2012**
(21) Numéro de dépôt: 09750046.6
(22) Date de dépôt: 06.05.2009
(51) Int. Cl.: A62D 3/36, C22B 3/10, C22B 3/44, C22B 7/00

(54) **PROCEDE DE TRAITEMENT D'UN SOLIDE AMIANTE**
VERFAHREN ZUR BEHANDLUNG EINES ASBESTSTOFFES
METHOD FOR TREATING AN ASBESTOS SOLID

(30) Priorité: 07.05.2008 FR 0802546
(43) Date de publication de la demande: 23.02.2011
(73) Titulaire: Institut National Polytechnique De Toulouse (INPT), 31029 Toulouse Cedex 4 (FR)
(72) Inventeur: DENIS, Ghislain, F-31560 Calmont (FR); DELMAS, Michel, F-31320 Auzeville Tolosane (FR)
(74) Mandataire: Cabinet BARRE LAFORGUE & associés
(86) Numéro de dépôt international: PCT/FR2009/050837
(87) Numéro de publication internationale: WO 2009/141565

(56) Documents cités:
- CA-A1- 2 235 424
- CA-A1- 2 378 721
- CN-A- 101 161 591
- US-A- 3 708 014
- LEAO VERSIANE A ET AL: "Recovering magnesium from soapstone and asbestos tailings" LIGHT METALS 1997. PROCEEDINGS OF THE TECHNICAL SESSIONS PRESENTED BY THE TMS ALUMINIUM COMMITTEE AT THE 126TH. TMS ANNUAL MEETING, ORLANDO, FEB. 9 - 13, 1997; [PROCEEDINGS OF THE TMS ANNUAL MEETING], WARRENDALE, TMS, US, 13 février 1997 (1997-02-13), pages 511-521, XP008102009 ISBN: 978-0-87339-362-1 [extrait le 1997-02-13]

## Description

L'invention concerne un procédé de traitement d'un solide amianté adapté pour en réaliser le recyclage total en espèces chimiques séparées directement utilisables comme matières premières dans des applications industrielles.

L'amiante désigne des roches d'origine métamorphique, qui sont naturellement fibreuses et qui ont été utilisées dans l'industrie, notamment dans l'industrie de la construction, en raison de leur point de fusion élevé, de leur résistance à la traction, de leur stabilité chimique et de leur aptitude au filage.

Cependant, les pathologies respiratoires humaines dues à l'utilisation et à l'exposition à l'amiante ont été décrites. Ces pathologies sont liées à la nature de l'amiante et à son aptitude à libérer des particules microscopiques, dites fibres d'amiante, susceptibles d'être véhiculées par voie aérienne et d'atteindre, par inhalation, les alvéoles pulmonaires et de migrer jusqu'à la plèvre en induisant des pathologies bénignes ou malignes.

Bien que l'interdiction visant l'utilisation de l'amiante dans les matériaux de construction remonte à plus de dix ans, il reste des quantités importantes de matériaux de construction contenant de l'amiante en attente d'être traitées pour en neutraliser la dangerosité et les risques pour la santé humaine.

On connaît différents procédés visant à traiter des déchets d'amiante, seuls ou en mélange avec d'autres composés, et adaptés pour modifier les propriétés physiques de l'amiante, notamment les caractéristiques agressives des fibres d'amiante, et pour transformer ces déchets en matériaux ne présentant pas la toxicité de l'amiante.

Ainsi, on a proposé de réaliser une vitrification totale de déchets d'amiante par traitement thermique à une température supérieure à 1000°C. On a aussi proposé un traitement de déchets d'amiante par vitrification superficielle de granulats adapté pour isoler un déchet contenant de l'amiante résiduel par une épaisseur de lave. De telles solutions sont coûteuses en énergie et ne permettent pas de recycler les composants chimiques de ces déchets d'amiante sous la forme de matériaux valorisables. Ces solutions posent également des problèmes de réalisation pratique. En particulier, elles exigent des installations de chauffage à haute température et une consommation d'énergie qui ne peut pas être compensée par la valeur du produit généré.

Un deuxième type de solution connue consiste à attaquer chimiquement une épaisseur superficielle des déchets d'amiante pour modifier en surface la morphologie des fibres d'amiante afin de les rendre moins toxiques en isolant par enrobage les particules solides de déchet d'amiante.

US 5 562 585 propose de réaliser une cuisson des déchets d'amiante en milieu aqueux en présence d'une composition susceptible de produire des ions hydroxydes, à haute température et à haute pression, de façon à détruire les structures fibreuses de l'amiante.

US 5 686 365 propose un traitement de dissolution chimique totale de fibres d'amiante en deux étapes. La première étape consiste en une attaque par une solution aqueuse d'hydroxyde de sodium, suivie d'une séparation du résidu non attaqué. La seconde étape est une attaque du résidu non attaqué par une solution aqueuse d'acide nitrique jusqu'à dissolution complète des fibres riches en silice.

CA 2 240 082 propose un procédé de traitement de résidus d'amiante issus de mines d'amiante par de l'acide chlorhydrique visant à décomposer ces résidus d'amiante et à isoler des sels de magnésium en solution et de la silice.

CA 2 378 721 décrit le traitement acide à chaud d'une poudre obtenue par broyage et séparation magnétique a partir d'un minerai de serpentine tel qu'un déchet minier provenant d'une mine d'amiante.

Ces procédés ne permettent pas de séparer efficacement les constituants chimiques de l'amiante, notamment les métaux et la silice, particulièrement le fer, le magnésium et la silice, en produits de haute valeur ajoutée en vue de les recycler sous la forme d'espèces chimiques séparées dans différentes applications industrielles.

L'invention vise à pallier ces inconvénients en proposant un procédé de traitement d'un solide amianté en vue de le décomposer en matières premières non toxiques aptes à être recyclées dans des utilisations industrielles.

L'invention vise également à proposer un tel procédé dans lequel l'amiante, qui est un déchet, sert de matière première pour la production de substances de base pour l'industrie, sans laisser de déchet ultime.

L'invention vise également à proposer un tel procédé de traitement permettant un recyclage de l'amiante dans lequel les éléments chimiques oxydés de l'amiante sont dissociés et isolés sous la forme d'espèces chimiques de grande pureté directement utilisables dans l'industrie, notamment dans l'industrie lourde et dans l'industrie chimique fine.

L'invention vise en outre à proposer un tel procédé de traitement de solide amianté par décomposition chimique des fibres d'amiante en espèces chimiques ne présentant pas la toxicité des fibres d'amiante, notamment sur les voies respiratoires.

L'invention vise également à proposer un tel procédé de traitement dans lequel les réactifs non consommés lors du traitement sont recyclés et sont susceptibles d'être utilisés dans des applications industrielles variées, et en particulier mais non exclusivement dans un même procédé de traitement d'un solide amianté.

Un autre objectif de l'invention est de proposer un tel procédé de traitement de solide amianté ne produisant aucun déchet ultime solide non recyclé ou nécessitant un stockage sécurisé.

L'invention vise également à proposer un tel procédé de traitement qui est simple, économique à l'installation et à l'utilisation et ne nécessite pas la construction d'installations complexes de traitement.

L'invention vise également à proposer un procédé de traitement qui soit économiquement rentable et permette la production de composés à haute valeur ajoutée pour l'industrie.

L'invention vise en particulier à proposer un tel procédé de traitement qui n'induise qu'une dépense énergétique modérée.

L'invention vise également à atteindre tous ces objectifs à moindre coût, en proposant un procédé de faible coût de revient, réalisé à partir de réactifs chimiques usuels et peu onéreux.

L'invention vise également à proposer un tel procédé de traitement privilégiant la préservation de l'environnement et le développement durable.

L'invention vise de surcroît à proposer un tel procédé qui préserve les habitudes de travail des personnels, soit facile à utiliser, et n'implique pour sa mise en oeuvre que peu de manipulations.

Dans tout le texte, le terme « solide amianté » désigne toute matière solide contenant au moins une quantité d'amiante. Les solides amiantés les plus couramment rencontrés sont en général constitués soit d'amiante pur, soit de déchets amiantés. Le terme « déchet amianté » désigne les déchets solides principalement formés de fibres d'amiante et de ciment (ou d'autre liant hydraulique). Il s'agit, en particulier, des tôles et conduites en amiante-ciment, aussi appelé généralement fibrociment, contenant une proportion massique minoritaire d'amiante pur, souvent comprise entre 10% et 15%, et qui sont inutilisables en l'état. Le terme « déchet amianté » désigne aussi des déchets solides, aussi appelés « flocage d'amiante » formés de fibres d'amiante en mélange, à titre de liant hydraulique, avec du plâtre dans une proportion massique minoritaire, notamment comprise entre 5% et 20%.

L'invention concerne donc un procédé de traitement d'un solide amianté, comprenant au moins une étape de traitement, dit traitement acide à chaud, de l'amiante du solide amianté à pression atmosphérique par une solution aqueuse d'acide chlorhydrique à une température voisine de la température d'ébullition de la solution aqueuse d'acide chlorhydrique, de façon à obtenir :
- une solution, dite solution non silicique, d'au moins un constituant non silicique de l'amiante dans la solution aqueuse d'acide chlorhydrique et,
- un solide, dit solide silicique,
caractérisé en ce qu'on soumet la solution non silicique à un traitement, dit traitement de précipitation, dans lequel on réalise une précipitation sélective des espèces cationiques du fer présentes dans cette solution non silicique.

Le traitement d'amiante par une solution aqueuse d'acide chlorhydrique à chaud, à la pression atmosphérique et à une température de l'ordre de la température d'ébullition de la solution aqueuse d'acide chlorhydrique permet la formation, d'une part, d'une solution aqueuse contenant des composants de nature non silicique de l'amiante et, d'autre part, d'un solide silicique constitué pour l'essentiel par les constituants silicique de l'amiante. Ainsi, le traitement acide à chaud d'amiante par une solution aqueuse d'acide chlorhydrique permet de conserver les composants siliciques de l'amiante sous une forme solide, notamment sous la forme de silice amorphe poreuse divisée, et d'extraire les composants non siliciques de l'amiante sous forme soluble dans la solution aqueuse d'acide chlorhydrique.

Ainsi, le traitement d'amiante avec une solution aqueuse d'acide chlorhydrique à chaud permet de décomposer les fibres d'amiante qui sont elles-mêmes toxiques par inhalation, en composants ne présentant pas la toxicité des fibres d'amiante de départ. En particulier, la silice amorphe poreuse divisée obtenue par traitement acide à chaud de l'amiante ne présente pas la toxicité de l'amiante.

En outre les inventeurs ont constaté que, de façon surprenante, la solution aqueuse acide contenant des composants non siliciques de l'amiante, appelée solution non silicique, contient non seulement des espèces cationiques du magnésium, mais qu'elle contient en outre des espèces cationiques du fer issues de l'attaque de l'amiante par l'acide chlorhydrique et de la solubilisation, dans la solution non silicique, des constituants non siliciques résultant de cette attaque. En outre, le traitement acide à chaud selon l'invention permet d'extraire de l'amiante sensiblement la totalité des espèces cationiques du magnésium ainsi que sensiblement la totalité des espèces cationiques du fer qui passent en solution dans la solution non silicique. Les espèces cationiques du magnésium et les espèces cationiques du fer de la solution non silicique acide sont sous la forme de chlorure de magnésium et de chlorure de fer qui sont parfaitement solubles dans la solution non silicique.

En outre et de façon totalement surprenante, les inventeurs ont constaté qu'il est possible d'effectuer un traitement de précipitation sélective des espèces cationiques du fer de la solution non silicique, permettant avantageusement de séparer les espèces cationiques du fer, qui précipitent sous une forme solide dans la solution non silicique, et les espèces cationiques du magnésium qui demeurent en solution dans la solution non silicique.

Ainsi, dans un procédé selon l'invention, on réalise une séparation des composés siliciques, notamment de la silice, des composés du fer et des composés du magnésium contenus dans l'amiante, sans avoir recours à des étapes de broyage, d'attrition, de traitement chimique visant à réduire les composés cationiques du fer en fer métallique et de séparation magnétique du fer métallique formé.

Ainsi, un procédé selon l'invention permet de transformer la totalité de l'amiante en une pluralité de matières premières séparées toutes utilisables dans l'industrie, notamment en silice amorphe poreuse divisée, en espèces cationiques du fer et en espèces cationiques du magnésium.

Avantageusement et selon l'invention, on réalise le traitement de précipitation en ajustant le pH de la solution non silicique à une valeur comprise entre pH 5 et pH 7, notamment à une valeur de l'ordre de pH 6. En particulier, l'ajustement du pH de la solution non silicique, à une valeur proche de pH 7, mais toutefois légèrement acide permet de précipiter de façon sélective les espèces cationiques du fer de la solution non silicique sans entraîner significativement la précipitation des espèces cationiques du magnésium qui restent en solution dans la solution non silicique.

Les inventeurs pensent que les espèces cationiques du fer, présentes dans la solution acide sous la forme de chlorures de fer sont spécifiquement transformées en hydroxydes de fer par un mécanisme réactionnel impliquant une substitution ionique des ions chlorures par les ions hydroxydes, ladite substitution ionique des ions chlorures des espèces cationiques du fer par les ions hydroxydes étant spécifiquement assistée par le pH et entraînant la précipitation de la quasi-totalité des espèces cationiques du fer sous la forme d'hydroxydes de fer, sans entraîner la précipitation des espèces cationiques du magnésium.

Avantageusement et selon l'invention, le traitement de précipitation consiste en un ajout, dans la solution non silicique, d'une quantité d'au moins un composé, dit composé basique, susceptible d'augmenter la concentration en ions hydroxydes dans la solution non silicique.

En particulier, on ajoute dans la solution non silicique une quantité d'au moins un composé basique susceptible de produire des ions hydroxydes dans la solution non silicique, sous la forme d'une quantité d'une solution aqueuse dudit composé basique, ou sous la forme d'une quantité d'une suspension dudit composé basique dans l'eau, ou encore sous la forme d'une quantité d'un composé basique sous la forme solide, que l'on ajoute directement dans la solution non silicique. Plus particulièrement, on ajoute dans la solution non silicique une quantité d'au moins un composé basique susceptible de produire des ions hydroxydes dans la solution non silicique adaptée pour que la quasi-totalité des espèces cationiques du fer précipitent, et pour qu'il ne reste pas de composé basique libre dans la solution non silicique.

Avantageusement et selon l'invention, on choisit le composé basique dans le groupe formé des oxydes des métaux alcalino-terreux, des hydroxydes des métaux alcalins et des hydroxydes des métaux alcalino-terreux. En effet, les inventeurs ont observé que les oxydes et les hydroxydes des métaux alcalino-terreux et les hydroxydes des métaux alcalins qui sont des composés susceptibles de produire des ions hydroxydes sont notamment adaptés pour réaliser une substitution ionique à une valeur de pH comprise entre pH 5 et pH 7, notamment de l'ordre de pH 6.

En outre, il est d'un intérêt particulier de choisir le composé basique de façon qu'il soit adapté pour libérer dans la solution non silicique, outre des ions hydroxydes, des cations métalliques appartenant à la composition atomique élémentaire d'au moins un des composants non siliciques de l'amiante. Ainsi, l'addition du (des) composé(s) basique(s) à la solution non silicique n'apporte pas une quantité significative d'un élément atomique nouveau en regard de la composition atomique de l'amiante.

Avantageusement et selon l'invention, le composé basique est choisit dans le groupe formé de l'oxyde de magnésium sec et de l'hydroxyde de magnésium. En particulier, l'addition d'une quantité d'oxyde de magnésium sec et/ou d'hydroxyde de magnésium permet la neutralisation d'au moins une partie de la quantité d'acide chlorhydrique non consommé lors du traitement acide de l'amiante. Cette neutralisation s'accompagne en outre de la transformation de l'oxyde de magnésium sec et/ou de l'hydroxyde de magnésium ajouté, à titre de composé basique, en chlorure de magnésium. En particulier, l'addition d'une quantité supplémentaire d'oxyde de magnésium sec et/ou d'hydroxyde de magnésium permet la neutralisation de la quantité résiduelle d'acide chlorhydrique non consommé lors de la phase de traitement acide de l'amiante, ainsi que la neutralisation du caractère acide des composés cationiques du fer. La quantité d'oxyde de magnésium sec et/ou d'hydroxyde de magnésium ajoutée est choisie pour que, à l'issue de cette addition supplémentaire, le pH de la solution non silicique soit compris entre pH 5 et pH 7, notamment de l'ordre de pH 6, et que la totalité des espèces cationiques du fer de la solution non silicique précipitent.

En outre, il est d'un intérêt particulier de choisir l'oxyde de magnésium sec et/ou de l'hydroxyde de magnésium qui est adapté pour libérer en solution aqueuse acide, outre des ions hydroxydes, des ions magnésium appartenant à la composition atomique élémentaire d'au moins un des composants non siliciques de l'amiante. Ainsi, l'addition de l'oxyde de magnésium sec et/ou de l'hydroxyde de magnésium à la solution non silicique n'apporte pas une quantité significative d'un élément atomique nouveau en regard de la composition atomique de l'amiante.

La conversion de l'oxyde de magnésium sec (MgO) et/ou de l'hydroxyde de magnésium (Mg(OH)₂) hydraté en chlorure de magnésium dans la solution non silicique à un pH compris entre pH 5 et pH 7, notamment de l'ordre de pH 6, permet la conversion sélective des espèces cationiques du fer sous forme de chlorure de fer, qui sont dissous dans la solution non silicique, en espèces cationiques du fer, sous forme d'hydroxydes, qui sont des espèces insolubles dans cette solution et qui forment un précipité.

Ainsi, corrélativement à la transformation des espèces cationiques du fer initialement sous forme de chlorure de fer dans la solution non silicique en espèces cationiques du fer sous forme d'hydroxyde de fer qui précipitent, on convertit l'oxyde de magnésium sec et/ou l'hydroxyde de magnésium en une espèce chimique, notamment en chlorure de magnésium, qui est elle-même soluble dans la solution non silicique, et qui est d'ailleurs déjà présente dans la solution non silicique avant l'étape de précipitation. Ainsi le traitement de la solution non silicique par l'oxyde de magnésium sec et/ou l'hydroxyde de magnésium, conduisant à la précipitation de la quasi-totalité des espèces cationiques du fer, ne conduit pas à l'apparition dans la solution non silicique de composés nouveaux autres que les espèces cationiques du fer qui précipitent. Ainsi le traitement par l'oxyde de magnésium sec et/ou l'hydroxyde de magnésium n'affecte pas la pureté des espèces cationiques du fer et des espèces cationiques du magnésium présentes dans la solution non silicique.

En outre, le traitement par l'oxyde de magnésium sec et/ou l'hydroxyde de magnésium, adapté pour ajuster le pH de la solution non silicique à une valeur comprise entre pH 5 et pH 7, notamment à une valeur de l'ordre de pH 6 permet en outre de transformer la totalité de l'oxyde de magnésium sec et/ou de l'hydroxyde de magnésium en chlorure de magnésium, sans laisser, dans la solution non silicique, d'hydroxyde de magnésium résiduel susceptible d'altérer la pureté chimique du chlorure de magnésium.

Avantageusement et selon l'invention, lors du traitement acide à chaud, on prépare une suspension du solide amianté dans la solution aqueuse d'acide chlorhydrique et on chauffe la suspension du solide amianté dans la solution aqueuse d'acide chlorhydrique à une température comprise entre 70°C et 110°C, notamment de l'ordre de 95°C. Avantageusement et selon l'invention, on chauffe ladite suspension du solide amianté dans la solution aqueuse d'acide chlorhydrique, notamment à une température adaptée pour provoquer le reflux de la solution aqueuse d'acide chlorhydrique, de façon à permettre une attaque acide des constituants non siliciques du solide amianté et une dissolution des produits de réaction de cette attaque dans la solution aqueuse d'acide chlorhydrique. Il est à noter que la concentration de l'acide chlorhydrique de la solution aqueuse diminue au cours du traitement acide à chaud par consommation d'une partie dudit acide chlorhydrique lors de l'attaque acide et que la température d'ébullition de la solution aqueuse d'acide chlorhydrique augmente lors de ladite attaque acide.

Dans un mode de mise en oeuvre particulier d'un procédé selon l'invention, on réalise le traitement acide à chaud du solide amianté en utilisant un réacteur comprenant un récipient, par exemple un récipient en verre, permettant la réalisation dudit traitement acide à chaud, à la pression atmosphérique, ce récipient étant adapté pour permettre le chauffage de la suspension du solide amianté dans la solution acide à une température adaptée pour permettre l'ébullition et le reflux de la solution acide. Le réacteur comprend en outre un condenseur adapté pour permettre la condensation de la totalité des vapeurs formées par le chauffage de la suspension du solide amianté dans la solution acide, et un circuit de recyclage de ces vapeurs condensées dans ladite suspension de façon que les vapeurs émise par la solution acide restent confinées à l'intérieur du réacteur.

Dans un procédé selon l'invention, lors du traitement acide à chaud, on chauffe la suspension du solide amianté dans la solution acide à une température de l'ordre de la température d'ébullition de la solution acide.

Avantageusement et selon l'invention, lors du traitement acide à chaud, on chauffe la suspension du solide amianté dans la solution aqueuse d'acide chlorhydrique pendant une durée comprise entre 30 min et 300 min, notamment de l'ordre de 150 min.

Avantageusement et selon l'invention, la concentration d'acide chlorhydrique dans la solution aqueuse d'acide chlorhydrique d'un traitement acide à chaud est supérieure à 100 g/L, notamment comprise entre 100 g/L et 150 g/L. Une telle concentration est adaptée pour que la solution reste acide à la fin de l'attaque acide des constituants non siliciques du solide amianté et pour que les constituants non siliciques de la solution non silicique restent en solution.

Avantageusement et selon l'invention, on réalise le traitement acide à chaud à partir d'un solide amianté présentant une granulométrie inférieure à 20 mm, notamment comprise entre 1 mm et 10 mm. On obtient une telle granulométrie par des moyens connus en soi, notamment par broyage du solide amianté. Une telle granulométrie favorise la déstructuration des fibres d'amiante lors de l'attaque acide à chaud du solide amianté en augmentant l'aire de la surface du solide amianté susceptible de subir cette attaque acide. Ainsi, dans un procédé selon l'invention, préalablement au traitement acide à chaud, on prépare un granulat d'amiante par broyage du solide amianté à sec ou, de préférence, en présence d'une quantité d'eau de façon à éviter la production de poussières du solide amianté. On réalise cette fragmentation avec des dispositifs sécurisés de broyage mécanique connus en soi et notamment équipés de filtres adaptés pour retenir les éventuelles poussières d'amiantes toxiques à l'intérieur du dispositif ou encore selon la technique du moulin humide, plus connue sous le vocable « wetmild », c'est-à-dire en milieu humide ne produisant pas de poussière.

Avantageusement et selon l'invention, le traitement acide à chaud est adapté pour que la solution non silicique reste exempte de composé silicique. En particulier, on ajuste les conditions opératoires du traitement acide à chaud, notamment la concentration d'acide chlorhydrique dans la solution acide, la durée et la température du traitement acide à chaud, de façon que la solution non silicique soit exempte de constituant silicique en solution et que le solide silicique obtenu à l'issue du traitement acide à chaud soit exempt d'oxydes de fer, d'oxydes de magnésium et d'espèces cationiques du magnésium et/ou du fer non solubilisés.

En particulier, on ajuste les conditions opératoires de façon à obtenir de la silice amorphe poreuse divisée de grande qualité, de grande pureté et qui soit industriellement valorisable, et de façon à obtenir une solution non silicique qui soit exempte de silice.

Avantageusement et selon l'invention, préalablement au traitement de précipitation, on réalise une séparation solide/liquide du solide silicique et de la solution non silicique. On sépare le solide silicique contenant la totalité des constituants siliciques du solide amianté et la solution non silicique contenant la totalité des constituants non siliciques du solide amianté. On peut réaliser cette séparation solide/liquide en utilisant tout dispositif connu en soi.

A titre d'exemple, dans un premier mode particulier de réalisation de l'invention, on sépare le solide silicique et la solution non silicique par filtration avec un filtre adapté pour retenir le solide silicique et pour laisser s'écouler la solution non silicique. On obtient sur le filtre un résidu de filtration contenant les constituants siliciques de l'amiante. Pour éliminer les traces résiduelles d'acide provenant de la solution acide, on lave le solide silicique obtenu par filtration avec une quantité d'eau, ladite quantité d'eau étant adaptée pour que la valeur du pH de la solution de lavage à la sortie du filtre poreux soit sensiblement de l'ordre de la valeur du pH de l'eau utilisée pour le lavage.

Dans un autre mode particulier de réalisation de l'invention, on sépare le solide silicique et la solution non silicique par filtration sous pression réduite, avec un dispositif de filtration comprenant un filtre adapté pour retenir le solide silicique et un réceptacle, sous pression réduite, dans lequel la solution non silicique s'écoulant par le dispositif de filtration est aspirée. On obtient un résidu de filtration égoutté sur le filtre poreux contenant les constituants siliciques de l'amiante. Pour éliminer les traces résiduelles d'acide dans le solide silicique, on lave le solide silicique, avec une quantité d'eau adaptée pour que la valeur du pH de la solution s'écoulant du dispositif de filtration soit sensiblement de l'ordre de la valeur du pH de l'eau utilisée pour le lavage.

Avantageusement et selon l'invention, préalablement au traitement de précipitation, on extrait de la solution non silicique au moins une partie de l'acide chlorhydrique non consommé lors du traitement acide à chaud. En particulier, préalablement au traitement de précipitation, on réalise une extraction par évaporation/condensation sous pression réduite, d'une quantité d'acide chlorhydrique non consommé restant dans la solution non silicique. Dans ce mode particulier de réalisation de l'invention, l'acide chlorhydrique extrait par cette évaporation/condensation qui n'est pas un déchet, est une matière première susceptible d'être réutilisée lors de traitements ultérieurs. En outre, l'acide chlorhydrique est extrait lors de cette étape d'évaporation/condensation sous la forme d'une solution aqueuse d'acide chlorhydrique contenant une quantité d'acide chlorhydrique.

Avantageusement et selon l'invention, on utilise l'acide chlorhydrique non consommé, extrait de la solution non silicique, dans la solution acide d'un traitement acide à chaud ultérieur. Avantageusement, l'acide chlorhydrique résiduel est recyclé dans la solution acide d'un traitement acide à chaud d'un procédé selon l'invention. En particulier, l'acide chlorhydrique résiduel est recyclé dans une solution acide pour le traitement acide à chaud ultérieur d'un solide silicique destiné à accroître la pureté dudit solide silicique obtenu lors d'un traitement acide préalable.

Avantageusement et selon l'invention, après l'étape de précipitation, on réalise une séparation solide/liquide d'un précipité formé des espèces cationiques du fer et d'une solution résiduelle, dite solution magnésienne, contenant une quantité d'au moins une espèce ionique du magnésium. En particulier, on réalise l'étape de séparation solide/liquide des espèces cationiques du fer précipitées et de la solution magnésienne par filtration des espèces cationiques du fer au moyen d'un dispositif de filtration, notamment un dispositif de filtration à pression atmosphérique ou à pression supérieure à la pression atmosphérique, ou sous pression réduite, ou encore par sédimentation accélérée des espèces cationiques du fer, notamment par centrifugation, et prélèvement de la solution magnésienne.

Avantageusement et selon l'invention, on extrait l'eau de la solution magnésienne de façon à former une composition de sels de magnésium cristallisés. On réalise cette extraction de l'eau de la solution magnésienne par des moyens connus en soi, notamment par évaporation de l'eau par chauffage, par distillation de l'eau, en particulier par distillation sous pression réduite.

Avantageusement et selon l'invention, après la séparation solide/liquide du précipité formé des espèces cationiques du fer et de la solution magnésienne, pour réaliser une solubilisation des espèces cationiques du fer, on ajoute au précipité formé des espèces cationiques du fer, une quantité d'une solution aqueuse d'acide chlorhydrique de façon à former une solution aqueuse des espèces cationiques du fer. En particulier, une telle solution aqueuse des espèces cationiques du fer dans laquelle les espèces cationiques du fer sont sous la forme de chlorure de fer ferrique est adaptée pour une utilisation ultérieure, notamment comme floculant dans un procédé de traitement visant à l'assainissement des eaux.

Un procédé selon l'invention permet de séparer et de recycler non seulement la totalité des constituants chimiques de l'amiante, notamment la silice, les espèces cationiques du magnésium et les espèces cationiques du fer, mais aussi les réactifs utilisés mais non consommés, notamment l'acide chlorhydrique en excès et l'oxyde de magnésium qui est transformé en chlorure de magnésium. En particulier, un procédé selon l'invention permet de recycler les constituants chimiques de l'amiante en réactifs de grande pureté directement utilisables comme matières premières dans l'industrie. Il est à noter que les matières premières issues de la décomposition de l'amiante ne sont plus des déchets présentant la toxicité de l'amiante et qu'ils peuvent être réglementairement transportés sur leur site d'utilisation.

Avantageusement et selon l'invention, le solide amianté est de l'amiante pur auquel on applique ledit traitement acide à chaud. Un procédé selon l'invention peut ainsi être appliqué à un solide amianté formé d'amiante pur, par exemple à des déchets solides choisis dans le groupe formé des déchets d'amiante issus de l'extraction minière et des déchets d'amiante issus de l'industrie automobile, par exemple sous la forme de garnitures de freins d'automobiles ou de toute autre pièce en amiante, des déchets issus de l'industrie de la construction, par exemple sous la forme d'isolants thermiques.

Dans cette première application d'un procédé selon l'invention, on réalise directement le traitement de l'amiante pur avec une solution d'acide chlorhydrique à chaud, puis on sépare par filtration le solide silicique de la solution non silicique. On réalise ensuite un traitement de précipitation sélective des espèces cationiques du fer de la solution non silicique de façon à séparer lesdites espèces cationiques du fer qui précipitent des espèces cationiques du magnésium qui restent en solution.

A noter que dans cette première application d'un procédé selon l'invention, on sépare un solide silicique contenant de la silice amorphe poreuse divisée présentant un taux de pureté élevé, les espèces cationiques du fer, et les espèces cationiques du magnésium, et on recycle l'acide chlorhydrique non consommé lors du traitement acide.

Un procédé selon l'invention peut être appliqué à un solide amianté, tel qu'un déchet amianté, contenant des fibres d'amiante. Le procédé selon l'invention comprend alors un traitement préalable de séparation de l'amiante dudit solide amianté avant le traitement acide à chaud.

Ainsi, avantageusement et selon l'invention, le solide amianté étant un déchet amianté contenant une proportion massique d'amiante comprise entre 10% et 15%, préalablement au traitement acide à chaud, on réalise une séparation de l'amiante dudit déchet amianté. Avantageusement, ce traitement de séparation est adapté pour permettre la décomposition du déchet amianté, d'une part, en amiante et, d'autre part en produits totalement exempts d'amiante.

Il est possible de réaliser ce traitement de séparation de l'amiante dudit déchet amianté par une solution d'acide chlorhydrique à température ambiante, et à pression atmosphérique, apte à réaliser spécifiquement une attaque acide d'au moins une partie des constituants non amiantés du déchet amianté et entraînant une dissolution d'au moins une partie de ces composés non amiantés du déchet amianté.

Avantageusement et selon l'invention, pour la séparation de l'amiante du déchet amianté, on réalise au moins un traitement, dit traitement acide à froid, dans lequel on plonge le déchet amianté dans une solution aqueuse contenant de l'acide chlorhydrique à une concentration supérieure à 200 g/L, notamment de l'ordre de 250 g/L, à température ambiante et à pression atmosphérique, et on incube le mélange sous agitation pendant une durée supérieure à 1 h, notamment comprise entre 2 h et 3 h. En particulier, on ajuste la durée du traitement acide à froid de façon que la totalité du déchet amianté, notamment les fragments les plus gros dudit déchet amianté, soient transformés en une suspension pâteuse sensiblement homogène.

Ainsi, dans cette seconde application d'un procédé selon l'invention, on traite d'abord le déchet amianté, notamment des tôles et conduites en fibrociment, contenant une proportion massique de 10% à 15% d'amiante pur, par une solution d'acide chlorhydrique à froid, puis on sépare la solution ainsi obtenue contenant les produits de l'attaque acide des constituants du ciment et un solide contenant l'amiante et la silice constitutive du ciment, et on dissocie ultérieurement, par un traitement acide à chaud de l'amiante solide et de la silice constitutive du ciment, la silice et les composés non siliciques de l'amiante solide.

Ainsi, dans cette seconde application d'un procédé selon l'invention, on réalise d'abord une séparation de l'amiante d'un déchet amianté comprenant un traitement du déchet amianté dans une solution aqueuse d'acide chlorhydrique à température ambiante, appelé traitement acide à froid, puis on réalise une décomposition de l'amiante, obtenue lors du traitement acide à froid préalable, par un traitement acide à chaud.

Dans cette seconde application d'un procédé selon l'invention, lors du traitement acide à froid, on réalise une attaque acide sélective d'une partie des composés non amiantés du déchet amianté, apte à entraîner une dissolution d'une partie de ces composés non amiantés, et on préserve de cette attaque acide et de cette dissolution les composants des fibres d'amiante et de la silice naturellement présente dans le ciment qui restent sous forme solide dans le milieu de traitement acide à froid. Il est à noter que le traitement acide à froid du solide amianté attaque peu l'amiante et n'entraîne pas sensiblement la dissolution des composants de l'amiante qui reste solide. En outre, le traitement acide à froid du solide amianté n'attaque pas la silice contenue dans le ciment qui reste solide avec l'amiante. En revanche, le traitement acide à chaud ultérieur de l'amiante en mélange avec la silice du ciment conduit à une attaque acide et à la dissolution des composés non siliciques de l'amiante dans la solution non silicique en préservant la silice qui reste sous forme d'un solide silicique. Ainsi, on extrait successivement, par attaque acide et solubilisation, les composants non amiantés du solide amianté lors d'un traitement acide à froid, puis on extrait les composants non siliciques de l'amiante en mélange avec la silice du ciment lors d'un traitement acide à chaud, et on sépare les espèces cationiques du fer et les espèces cationiques du magnésium de la solution non silicique en précipitant sélectivement les espèces cationiques du fer par augmentation de la concentration en ions hydroxydes dans la solution non silicique.

Avantageusement, on traite le déchet amianté de façon à en extraire les constituants non amiantés et à produire un solide contenant de l'amiante en mélange avec de la silice naturellement présente dans l'argile du ciment, que l'on soumet, ultérieurement, à un traitement acide à chaud d'attaque et de décomposition des fibres d'amiante, adapté pour former de la silice et au moins un composé choisi dans le groupe formé des espèces cationiques du fer et des espèces cationiques du magnésium.

En outre, le traitement de séparation de l'amiante d'un déchet amianté permet de réduire d'environ 75% la masse du déchet nécessitant un traitement acide à chaud de détoxification des fibres d'amiante par l'acide chlorhydrique. En particulier, la fraction du déchet amianté ne contenant pas d'amiante ne nécessite pas de traitement acide à chaud de détoxification des fibres d'amiantes.

A l'issue du traitement de séparation, de préférence, on extrait l'acide chlorhydrique non consommé et on recycle cette quantité d'acide chlorhydrique dans une solution aqueuse lors d'une étape ultérieure de traitement acide à chaud ou de traitement acide à froid.

L'invention concerne également un procédé caractérisé en combinaison par tout ou partie des caractéristiques mentionnées ci-dessus ou ci-après.

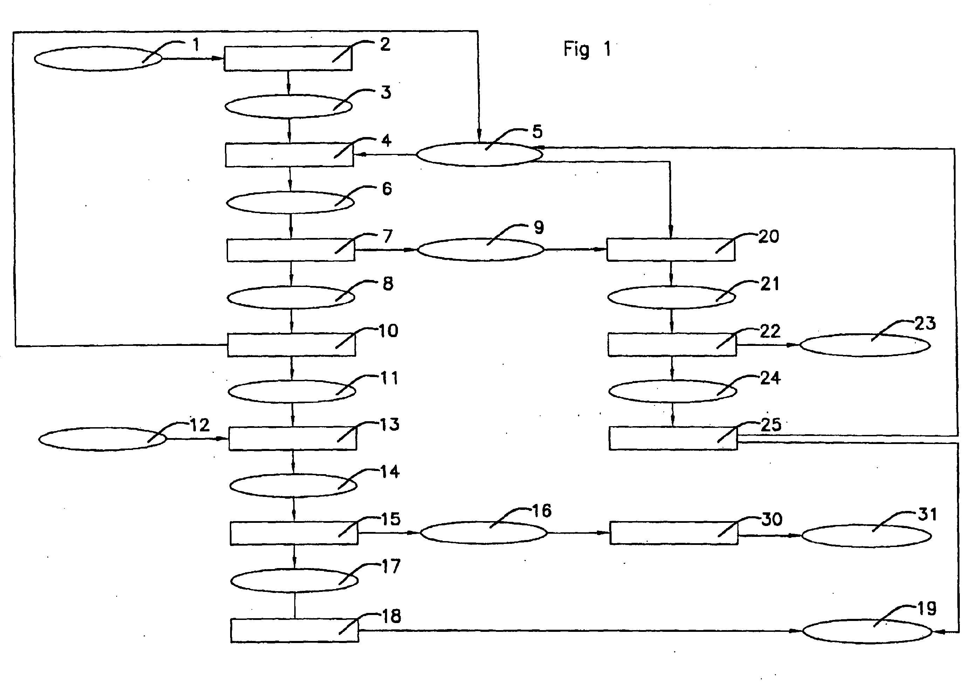

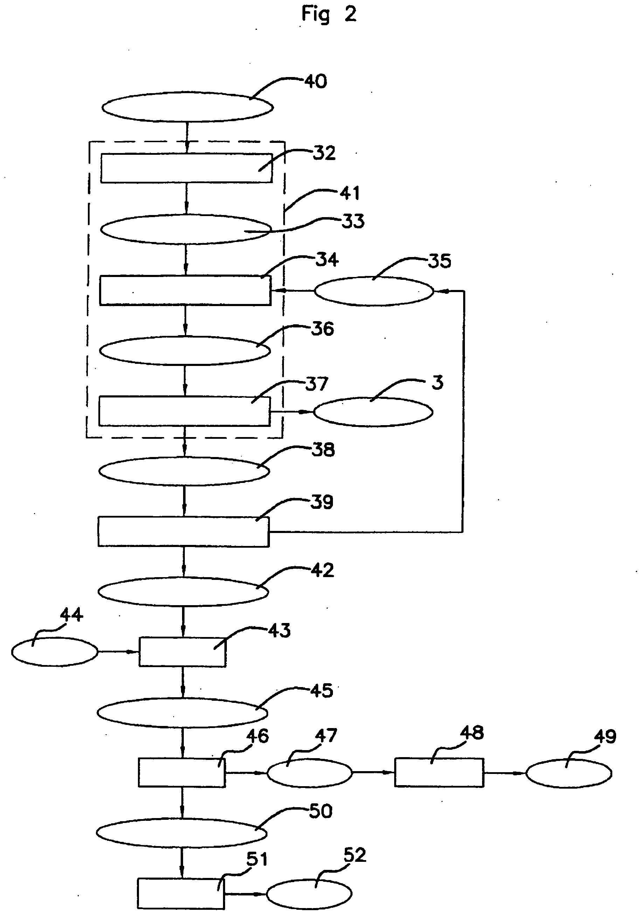

D'autres buts, caractéristiques et avantages de l'invention apparaîtront à la lecture de la description suivante de ses exemples de mise en oeuvre donnés à titre non limitatif, et qui se réfèrent aux figures 1 et 2 annexées qui représentent des modes de réalisation préférentiels de l'invention, donnés uniquement à titre d'exemples non limitatifs.
- la figure 1 est un schéma synoptique illustrant une première variante d'une première application d'un procédé de traitement d'un solide amianté formé d'amiante pur selon l'invention,
- la figure 2 est un schéma synoptique illustrant une variante d'une seconde application d'un procédé de traitement d'un solide amianté formé d'un déchet amianté selon l'invention,

Dans une première variante, représentée en figure 1, d'une première application d'un procédé selon l'invention, on transforme par fragmentation 2 un solide amianté 1 constitué d'amiante pur, notamment des plaques ou des cordons ou de la laine isolants pour former un granulat 3 d'amiante dont la granulométrie moyenne est inférieure à 20 mm, notamment comprise entre 1 mm et 10 mm. On réalise cette fragmentation 2 du solide amianté 1 par broyage à sec ou, de préférence, en présence d'eau en utilisant des dispositifs mécaniques de broyage connus en soi. Pour le traitement d'un solide amianté à l'échelle expérimentale, on met en contact le granulat 3 d'amiante avec une solution aqueuse 5 d'acide chlorhydrique dans un récipient, notamment un récipient en verre, adapté pour permettre le traitement acide à chaud 4, et dans lequel le granulat 3 d'amiante et la solution acide sont mélangés par agitation mécanique ou par agitation magnétique. On chauffe à une température voisine de la température d'ébullition de ladite solution aqueuse 5 d'acide chlorhydrique et on maintient le traitement acide 4 par chauffage à reflux de la suspension du granulat d'amiante dans la solution aqueuse d'acide chlorhydrique pendant une durée adaptée pour former une suspension amiantée 6 d'un solide silicique 9 dans une solution non silicique 8. A l'échelle industrielle, on réalise, de préférence, le traitement acide à chaud 4 dans un dispositif mélangeur, aussi appelé malaxeur, adapté pour chauffer la suspension du granulat d'amiante 3 dans la solution acide en évitant de rejeter les vapeurs d'acide dans l'atmosphère. A l'issue du traitement acide à chaud 4, on obtient une suspension 6 de silice formant un solide dans une solution aqueuse d'acide chlorhydrique contenant les composants non siliciques du solide amianté. On réalise une séparation 7 solide/liquide du solide silicique 9 et de la solution non silicique 8 par filtration sur un filtre inerte adapté pour que la solution non silicique 8 s'écoule du filtre et que la silice constitutive du solide silicique 9 soit totalement retenue sur le filtre.

Dans cette première variante, représentée en figure 1, d'une première application d'un procédé selon l'invention, on extrait de la solution non silicique 8, exempte de silice 9, par évaporation/condensation 10 sous pression réduite tout ou partie de l'acide chlorhydrique non consommé lors du traitement acide à chaud 4 et restant dans la solution non silicique 8. Pour réaliser cette évaporation/condensation 10, on utilise un dispositif de distillation hermétiquement clos aux vapeurs comprenant un récipient muni d'un système de chauffage adapté pour élever la température de la solution non silicique 8 dans ledit récipient et pour permettre l'évaporation de la quasi-totalité de l'acide chlorhydrique non consommé lors du traitement acide à chaud 4 ainsi que de l'eau, un condenseur adapté pour permettre la condensation des vapeurs de ladite partie d'acide chlorhydrique et de l'eau dans un réceptacle, séparé du récipient de chauffage, dans lequel l'acide chlorhydrique s'écoule, et une trompe à eau raccordée au dispositif hermétiquement clos et adaptée pour établir, à l'intérieur de celui-ci, une pression dont la valeur est comprise entre 100 et 150 hPa. On recycle cette quantité d'acide chlorhydrique non consommé extrait par distillation 10 dans une solution aqueuse 5 d'acide chlorhydrique pour un traitement 4 ultérieur d'un granulat 3 d'amiante ou pour un traitement 20 d'affinage de la pureté chimique d'un solide silicique 9 en silice amorphe poreuse 23 divisée et pure.

En outre, par évaporation/condensation 10 d'une quantité d'acide chlorhydrique d'une solution non silicique 8, on obtient, outre cette quantité d'acide chlorhydrique, une quantité d'un résidu 11 sensiblement dépourvu d'acide chlorhydrique et contenant des constituants non siliciques du solide amianté 1.

On soumet ce résidu 11 non silicique à un traitement de précipitation 13 dans lequel on ajoute au résidu 11, une quantité d'une suspension aqueuse 12 contenant au moins un composé basique susceptible d'augmenter la concentration en ions hydroxydes dans le résidu 11. Au cours du traitement de précipitation 13 par le composé basique 12, l'acide chlorhydrique non extrait de la suspension 11 non silicique lors de la distillation 10 est neutralisé et les espèces cationiques 16 du fer précipitent sous la forme d'hydroxyde de fer, en formant une suspension 14 des espèces cationiques 16 du fer dans une solution 18 des espèces cationiques du magnésium. On réalise cette précipitation 13 à température ambiante et à pression atmosphérique. On réalise une séparation 15 solide/liquide des espèces cationiques 16 du fer précipitées et de la solution 17 des espèces cationiques du magnésium par filtration sur un filtre inerte adapté pour que la solution 17 des espèces cationiques du magnésium s'écoule du filtre et que le solide constitué des espèces cationiques 16 du fer soit retenu sur le filtre. On collecte les hydroxydes de fer 16 précipités sur le filtre.

Dans cette première variante, représentée en figure 1, d'une première application d'un procédé selon l'invention, on lave les hydroxydes de fer 16 précipités sur le filtre avec une quantité d'eau et on réalise une attaque acide des hydroxydes de fer 16 précipités avec une quantité d'une solution aqueuse d'acide chlorhydrique adaptée pour réaliser une solubilisation 30 des hydroxydes de fer 16 précipités et pour former une solution aqueuse 31 de chlorure de fer.

D'autre part, on élimine l'eau de la solution 17 par évaporation 18 à chaud et sous pression réduite. A l'issue de cette évaporation 18, les espèces cationiques du magnésium de la solution 17 forment un précipité 19 de chlorure de magnésium MgCl₂ hydraté ou anhydre, selon les conditions de température et de durée de séchage.

Par ailleurs, on soumet le solide silicique 9 à au moins une étape de traitement acide à chaud 20 du solide silicique, dit traitement de raffinage, avec une quantité d'une solution aqueuse 5 d'acide chlorhydrique, adapté pour réaliser une extraction 20 complémentaire des espèces cationiques du magnésium résiduelles du solide silicique 9 dans une suspension silicique 21 d'affinage. Ainsi on réalise un traitement 20 du solide silicique 9 à reflux de la solution d'acide chlorhydrique 5. On fractionne la suspension silicique 21 d'affinage obtenue au moyen d'un traitement de séparation solide/liquide 22 adapté pour séparer une quantité de silice amorphe poreuse 23 d'une solution de raffinage 24 contenant de l'acide chlorhydrique non consommé en solution dans l'eau et des espèces cationiques du magnésium en faible quantité. Par distillation 25 sous pression réduite par une trompe à eau de la solution de raffinage 24, on obtient un distillat contenant une quantité d'acide chlorhydrique, séparé d'un résidu de distillation contenant les espèces cationiques du magnésium 19, notamment le chlorure de magnésium MgCl₂ hydraté ou anhydre en fonction des conditions de séchage.

Dans une deuxième variante, représentée en figure 2, d'une seconde application d'un procédé selon l'invention, on réalise un traitement de détoxification d'un solide amianté dans lequel le solide amianté est un déchet amianté 40 constitué d'amiante-ciment ou fibrociment. Ainsi, on réalise un traitement 41 de séparation d'une part des fibres amiantées et d'autre part des constituants non amiantés du déchet amianté 40, préalablement à la détoxification des fibres d'amiante lors d'un traitement acide à chaud. Pour cette séparation 41 des fibres d'amiante et des constituants non amiantés, on réalise d'abord une étape 32 d'humidification et de fragmentation du déchet amianté 40 en un granulat 33. On réalise cette fragmentation par des moyens connus en soi, notamment par broyage en présence d'eau. Le granulat 33 d'amiante-ciment humide et fragmenté ainsi obtenu est mis en contact, sous agitation, à pression atmosphérique, à température ambiante, avec une solution aqueuse 35 d'acide chlorhydrique à une concentration sensiblement de l'ordre de 250 g/L, pendant 150 min pour un traitement acide à froid 34 d'attaque acide et de dissolution chimique des composants non amiantés et des composants non silicique du déchet amianté 40. Par attaque acide et dissolution des espèces chimiques non siliciques constitutives du ciment, on obtient une suspension 36 d'un granulat 3, formé d'une part de fibres d'amiante exemptes de composés non amianté du déchet amianté, et d'autre part de silice habituellement présente dans l'argile constitutive du ciment, dans une solution aqueuse acide 38 contenant les constituants non amiantés et les constituants non siliciques du déchet amianté 40. On réalise une étape 37 de séparation solide/liquide, notamment par filtration, du granulat 3 formé de fibres d'amiante pour le soumettre, ultérieurement, à un traitement acide à chaud 4 de décomposition en silice et en espèces cationiques du magnésium et en espèces cationiques du fer. On réalise cette étape 37 de séparation solide/liquide par filtration en utilisant des moyens de filtration connus en soi, sous pression atmosphérique, ou sous pression supérieure à la pression atmosphérique, ou sous pression réduite. A l'issue de l'étape 37 de séparation solide/liquide, on obtient, outre de l'amiante solide accompagné de la silice provenant du ciment, sous forme d'un granulat 3, une solution aqueuse 38 des constituants non amiantés du déchet amianté 40 contenant une quantité d'acide chlorhydrique non consommé au cours du traitement 34 d'attaque acide à froid. On extrait, par distillation 39 de la solution 38, une quantité d'une solution aqueuse d'acide chlorhydrique. On réalise la distillation 39 sous pression réduite, notamment à une pression comprise entre 100 hPa et 150 hPa au moyen d'une trompe à eau ou d'un autre dispositif susceptible de générer cette gamme de pression.

Ainsi, dans un procédé selon l'invention, on recycle la quantité d'acide chlorhydrique non consommé extrait par distillation 39 dans une solution aqueuse 35 d'acide chlorhydrique pour un traitement acide à froid 34 ultérieur d'une étape 41 de séparation de l'amiante 3 d'un déchet amianté 40.

Dans une deuxième variante, représentée en figure 2, d'une deuxième application d'un procédé selon l'invention, on produit par distillation 39 de la solution 38 une solution 42 résiduelle de la distillation 39 contenant les espèces cationiques constitutives du ciment, notamment du calcium, de l'aluminium et du fer sous forme de chlorures. On soumet cette solution 42 résiduelle à un traitement de précipitation 43 des espèces cationiques du fer et de l'aluminium en ajoutant une quantité d'une solution aqueuse 44 contenant au moins un composé basique susceptible d'augmenter la concentration en ions hydroxydes dans la solution 42 résiduelle. On réalise cette précipitation 43 des espèces cationiques du fer et des espèces cationiques de l'aluminium à température ambiante et à pression atmosphérique. On obtient une suspension 45 des espèces cationiques précipitées du fer et des espèces cationiques précipitées de l'aluminium dans une solution aqueuse contenant les espèces cationiques du calcium. On réalise une séparation 46 par filtration de la suspension 45 en un solide 47 contenant les espèces cationiques précipitées du fer et les espèces cationiques précipitées de l'aluminium sous la forme d'hydroxydes et en une solution aqueuse 50 de chlorure de calcium. On réalise cette séparation 46 par filtration par un moyen de filtration connu en soi, adapté pour permettre une filtration à pression atmosphérique, ou à une pression inférieure à la pression atmosphérique, ou à une pression supérieure à la pression atmosphérique. On élimine par évaporation 51 à chaud l'eau de la solution aqueuse 50 de chlorure de calcium et on obtient un résidu solide 52, sensiblement sec, formé de chlorure de calcium. On réalise un traitement 48 de solubilisation du solide 47 contenant en mélange les espèces cationiques précipitées du fer et les espèces cationiques précipitées de l'aluminium avec une solution aqueuse d'acide chlorhydrique en une solution 49 des espèces cationiques du fer et des espèces cationiques de l'aluminium, sous la forme de chlorures, notamment sous la forme de FeCl₃ et de AlCl₃.

Dans une troisième variante non représentée d'une première application d'un procédé selon l'invention, on lave le solide silicique 9 retenu sur le filtre poreux avec une quantité d'eau qui s'écoule dans la solution non silicique 8. Ainsi on élimine du solide silicique sensiblement la totalité de l'acide chlorhydrique non consommé lors du traitement acide à chaud 4 et on récupère cet acide chlorhydrique non consommé dans la solution non silicique 8. On obtient ainsi un solide silicique 9, constitué de silice amorphe poreuse divisée, sensiblement exempt de trace d'acide chlorhydrique et de constituant non silicique du solide amianté.

Dans une quatrième variante, non représentée, d'une première application d'un procédé selon l'invention, on réalise directement l'étape de précipitation 13 des espèces cationiques du fer de la solution non silicique 8, sans réaliser d'extraction 10 par distillation de l'acide chlorhydrique. Ainsi, on adapte la quantité de composé basique 12 susceptible d'augmenter la concentration en ions hydroxydes dans la solution 8 non silicique de façon que cette quantité soit suffisante pour neutraliser l'acide chlorhydrique non consommé dans la solution non silicique 8 et pour réaliser la précipitation des espèces cationiques 16 du fer. Ainsi, on ne recycle pas la quantité d'acide chlorhydrique non consommé dans la solution non silicique 8 sous la forme d'une solution aqueuse 5 d'acide chlorhydrique, mais on transforme cette quantité d'acide chlorhydrique non consommé en chlorure de magnésium et en eau par addition d'une quantité d'un oxyde de magnésium 12 lors de la précipitation 13.

Dans une cinquième variante, non représentée, d'une première application d'un procédé selon l'invention, on recycle directement la solution de raffinage 24, contenant une très faible quantité des espèces cationiques du fer et du magnésium dans une solution d'acide chlorhydrique 5.

Dans une sixième variante, non représentée, d'une deuxième application d'un procédé selon l'invention, on réalise une séparation des espèces cationiques du fer et des espèces cationiques de l'aluminium au moyen d'un procédé connu en soi adapté pour solubiliser spécifiquement les espèces cationiques de l'aluminium et pour conserver les espèces cationiques du fer sous forme solide. Par exemple, on utilise la méthode de dissolution spécifique, par la soude caustique, de l'aluminium contenu dans la bauxite, suivie d'une séparation des espèces cationiques de l'aluminium dissoutes et des espèces cationiques du fer non dissoutes et solides.

### EXEMPLE 1 - Traitement de plaques isolantes d'amiante

On prépare, par fragmentation de plaques isolantes usagées, un granulat d'amiante dont la granulométrie est sensiblement comprise entre 1 et 10 mm. On place 100 g du granulat d'amiante obtenu dans un réacteur dans lequel on ajoute 1 L d'une solution aqueuse contenant de l'acide chlorhydrique à une concentration de 105 g/L. On place la suspension obtenue sous agitation et on chauffe le réacteur à une température apte à provoquer et entretenir le reflux de la solution chlorhydrique aqueuse pendant 150 min à pression atmosphérique.

On filtre le mélange obtenu de façon à séparer un solide silicique retenu sur le filtre et un filtrat liquide acide. On lave le solide silicique retenu sur le filtre avec 0,250 L d'eau. On collecte l'eau de lavage avec le filtrat liquide acide qui contient l'acide chlorhydrique non consommé, l'eau ainsi que les sels de fer et de magnésium sous la forme de chlorures. On extrait du filtrat liquide acide, par distillation sous une pression réduite au moyen d'une trompe à eau, un distillat contenant environ 40 grammes de chlorure d'hydrogène non consommés lors de la phase de solubilisation ainsi que de l'eau. On récupère, en outre, un résidu sirupeux de distillation contenant les sels de fer et de magnésium sous la forme de chlorures.

On ajoute au résidu de distillation, une suspension contenant environ 2 g de magnésie (MgO) dans l'eau de façon à ajuster le pH du résidu de distillation à une valeur d'environ 6 unités de pH. On évalue le pH du résidu sirupeux par des moyens connus en soi et adaptés pour permettre de mesurer le pH d'une solution concentrée, notamment en utilisant un indicateur universel de pH, en particulier un indicateur universel de pH imprégné dans du papier. Les hydroxydes de fer formés par substitution ionique à pH 6 environ précipitent. On filtre, on lave à l'eau, et on sèche le précipité ainsi formé. On pèse 1,4 g de ces composés de fer.

On élimine l'eau du filtrat par évaporation sous pression réduite au moyen d'une trompe à eau. Le sel de magnésium MgCl₂, 6H₂O ainsi cristallisé, est séché puis pesé. On récupère ainsi 171 g de chlorure de magnésium hydraté.

Par ailleurs, dans le but d'accroître la pureté de la silice contenue dans le solide de filtration, on reprend le solide retenu sur le filtre et lavé à l'eau. On place ce solide dans un réacteur dans lequel on ajoute 1 L d'une solution aqueuse d'acide chlorhydrique à 105 g/L. On place le mélange obtenu sous agitation et on chauffe le réacteur à une température apte à entretenir le reflux de la solution chlorhydrique aqueuse pendant 150 min.

On filtre le mélange obtenu et on obtient un solide, constitué exclusivement de silice amorphe, retenu sur le filtre et une solution acide éluée du filtre. On lave le solide de silice retenu sur le filtre avec 250 mL d'eau. Après séchage à l'étuve, on pèse 42 g de silice amorphe poreuse divisée. La silice produite est caractérisée par diffraction des rayons X au moyen d'un modèle de diffractomètre XRD 3000TT de marque SEIFERT et présente un caractère de silice amorphe. La surface spécifique de la silice produite est mesurée par la méthode BET à 5 points au moyen d'un porosimètre ASAP2010 de marque MICROMETRICS. On mesure que la surface spécifique de la silice produite est de 186 m²/g de silice.

L'eau de lavage est collectée avec la solution acide qui contient l'acide chlorhydrique non consommé, l'eau ainsi que des sels de magnésium sous la forme de chlorures. On obtient, par évaporation de la solution acide sous une pression réduite au moyen d'une trompe à eau et condensation 104 g de chlorure d'hydrogène non consommé, ainsi que 0,6 g de MgCl₂, 6H₂O qui cristallise.

Le traitement de 100 g de plaques isolantes d'amiante avec 210 g d'acide chlorhydrique dans l'eau conduit à la production de 171,6 g de chlorure de magnésium, 1,4 g d'hydroxyde de fer et 42 g de silice amorphe poreuse. En outre, 66 g d'acide chlorhydrique ont été consommés et 144 g d'acide chlorhydrique ont été recyclés à l'issue de ce traitement de plaques isolantes.

### EXEMPLE 2 - Traitement de cordons isolants d'amiante

On prépare par fragmentation des cordons isolants usagés, un granulat d'amiante dont la granulométrie est sensiblement de l'ordre de 1 et 10 mm. On place 100 g de ce granulat dans un réacteur dans lequel on ajoute 1 L d'une solution aqueuse d'acide chlorhydrique à une concentration de 128 g/L. On place la suspension obtenue sous agitation et on chauffe le réacteur à une température apte à entretenir le reflux de la solution chlorhydrique aqueuse pendant 150 min à pression atmosphérique.

On filtre le mélange obtenu de façon à séparer un solide silicique retenu sur le filtre et un filtrat liquide acide. On lave le solide silicique retenu sur le filtre avec 0,250 L d'eau. On collecte l'eau de lavage avec le filtrat liquide acide qui contient l'acide chlorhydrique non consommé, l'eau ainsi que les sels de fer et de magnésium sous la forme de chlorures. On extrait du filtrat liquide acide, par distillation sous une pression réduite au moyen d'une trompe à eau, un distillat contenant environ 62 grammes de chlorure d'hydrogène non consommés lors de la phase de solubilisation et de l'eau. On récupère, en outre, un résidu de distillation contenant les sels de fer et de magnésium sous la forme de chlorures.

On ajoute au résidu de distillation, une suspension contenant environ 2 g de magnésie dans l'eau de façon à ajuster le pH du résidu de distillation à une valeur d'environ 6 unités de pH. Les hydroxydes de fer formés par substitution ionique à pH 6 environ précipitent. On filtre, on lave à l'eau, et on sèche le précipité ainsi formé. On pèse 1,7 g de ces composés de fer.

On élimine l'eau du filtrat par évaporation sous pression réduite au moyen d'une trompe à eau. Le sel de magnésium MgCl₂, 6H₂O qui cristallise, est séché puis pesé. On récupère ainsi 172 g de chlorure de magnésium hydraté.

Par ailleurs, dans le but d'accroître la pureté de la silice contenue dans le solide de filtration, on reprend le solide retenu sur le filtre et lavé à l'eau. On place ce solide dans un réacteur dans lequel on ajoute 1 L d'une solution aqueuse d'acide chlorhydrique à une concentration de 128 g/L. On place le mélange obtenu sous agitation et on chauffe le réacteur à une température apte à entretenir le reflux de la solution chlorhydrique aqueuse pendant 150 min.

On filtre le mélange obtenu et on obtient un solide, constitué exclusivement de silice amorphe, retenu sur le filtre et une solution acide éluée du filtre. On lave le solide de silice retenu sur le filtre avec 250 mL d'eau. Après séchage à l'étuve, on pèse 43 g de silice amorphe contenue dans le solide silicique. La silice produite est caractérisée par diffraction des rayons X au moyen d'un modèle de diffractomètre XRD 3000TT de marque SEIFERT et présente un caractère de silice amorphe. La surface spécifique de la silice produite mesurée comme précédemment est de 186 m²/g.

L'eau de lavage est collectée avec la solution acide qui contient l'acide chlorhydrique non consommé, l'eau ainsi que les sels de magnésium sous la forme de chlorures. On obtient par évaporation de la solution acide sous une pression réduite puis condensation 127 g de chlorure d'hydrogène non consommé, ainsi que 0,3 g de MgCl₂, 6H₂O qui cristallise.

Le traitement de 100 g de cordons isolants d'amiante avec 256 g d'acide chlorhydrique dans l'eau conduit à la production de 172,3 g de chlorure de magnésium, 1,7 g d'hydroxyde de fer et 43 g de silice amorphe poreuse. En outre, 67 g d'acide chlorhydrique ont été consommés, et 189 g d'acide chlorhydrique ont été recyclés à l'issue de ce traitement de cordons isolants.

### EXEMPLE 3 - Traitement de déchets d'amiante-ciment

100 g de fibrociment provenant de tôles et de conduites sont humidifiés à l'eau, fragmentés en granulat de fibrociment dont la granulométrie moyenne est comprise entre 1 mm et 10 mm, puis placés dans un réacteur agité dans lequel on ajoute 200 mL d'eau puis 300 mL d'une solution commerciale d'acide chlorhydrique à 37%. La concentration initiale d'acide chlorhydrique dans la solution aqueuse est de 25% environ. On maintient l'agitation pendant 150 min à température ambiante et sous pression atmosphérique.

On filtre le mélange ainsi obtenu de façon à séparer un solide contenant de l'amiante et de la silice provenant du ciment d'une solution d'acide chlorhydrique non consommé et contenant les espèces cationiques issues de la décomposition du ciment sous la forme de chlorures. On extrait de la solution acide contenant les produits issus de la décomposition du ciment, par distillation sous pression réduite, un distillat contenant 45 g de chlorure d'hydrogène non consommé en solution aqueuse.

On ajuste le pH de la solution résiduelle de distillation à une valeur de l'ordre de pH 6 par addition de 1,3 g d'hydroxyde de calcium (Ca(OH)₂) en suspension dans l'eau. Les hydroxydes de fer et les hydroxydes d'aluminium formés précipitent dans la solution aqueuse de chlorure de calcium (CaCl₂). On sépare par filtration le précipité et la solution de chlorure de calcium. Après séchage, on pèse 7 g d'hydroxyde de fer et d'hydroxyde d'aluminium. On évapore, sous pression réduite d'une trompe à eau, l'eau de la solution de chlorure de calcium. On obtient 92 g de chlorure de calcium CaCl₂, 2H₂O qui cristallisent.

On place le solide contenant l'amiante et la silice provenant de la décomposition du ciment dans un réacteur dans lequel on introduit 200 mL d'eau puis 80 mL d'une solution aqueuse d'acide chlorhydrique à 37%. La concentration initiale d'acide chlorhydrique dans la suspension est d'environ 107 g/L. On place la suspension obtenue sous agitation à pression atmosphérique et on chauffe le réacteur à une température apte à entretenir le reflux de la solution aqueuse d'acide chlorhydrique pendant 150 min.

On filtre le mélange obtenu de façon à séparer un solide silicique retenu sur le filtre d'une solution acide contenant les espèces cationiques du magnésium sous forme de chlorure de magnésium (MgCl₂) et on lave avec 250 mL d'eau le solide silicique retenu sur le filtre. Le solide silicique sec pèse 23 g.

Par distillation sous pression réduite, on récupère 28 g de chlorure d'hydrogène en solution aqueuse, alors que 2 g de MgCl₂, 6H₂O cristallisent. Le MgCl₂, 6H₂O cristallisé contient des traces de fer qu'il est possible d'extraire par un traitement de précipitation au MgO ou Mg(OH)₂.

Le traitement de 100 g de fibrociment avec 166 g d'acide chlorhydrique et 1,3 g de Ca(OH)₂ produit 2 g de chlorure de magnésium, 7 g d'hydroxyde de fer et d'aluminium que l'on peut séparer selon la méthode appliquée au traitement de la bauxite, 92 g de CaCl₂, 2H₂O et 23 g de silice amorphe poreuse. En outre, 93 g d'acide chlorhydrique ont été consommés et 73 g d'acide chlorhydrique ont été recyclés à l'issue de ce traitement de fibrociment.

### EXEMPLE 4 - Traitement de déchets issus de flocage d'amiante

100 g de flocage d'amiante utilisé anciennement à titre d'isolant thermique sont malaxés avec 100 mL d'eau de façon à former une pâte ne générant pas de poussières. La pâte formée est placée dans un réacteur agité dans lequel on ajoute 1,5 L d'une solution aqueuse d'acide chlorhydrique à 13,1 %. On maintient l'agitation pendant 10 min à température ambiante et sous pression atmosphérique.

On filtre le mélange ainsi obtenu de façon à séparer un solide contenant de l'amiante d'une solution d'acide chlorhydrique non consommé et contenant les espèces cationiques obtenues par dissolution du plâtre du flocage d'amiante. On évapore par distillation sous pression réduite ladite solution d'acide chlorhydrique contenant la totalité (196 g) de l'acide chlorhydrique initialement introduit et en formant un résidu de distillation. Ce résidu de distillation, majoritairement formé de sulfate de calcium, est lavé avec 80 mL d'eau, séché à l'étuve puis pesé. La masse de sulfate de calcium obtenue est de 12 g. Le sulfate de calcium ainsi obtenu peut être recyclé, en particulier dans du plâtre selon des procédés connus en soi. La solution de lavage du résidu de distillation, contenant des espèces solubles dans l'eau du déchet d'amiante est collectée.

On place le solide contenant l'amiante obtenu par filtration à l'issue du traitement acide à température ambiante dans un réacteur agité en présence de la solution recyclée à l'issue du traitement acide à température ambiante et contenant 196 g d'acide chlorhydrique. On place la suspension obtenue sous agitation à pression atmosphérique et on chauffe le réacteur à une température apte à entretenir le reflux de la solution aqueuse d'acide chlorhydrique pendant 30 min.

On filtre le mélange obtenu de façon à séparer un solide formé de silice amorphe retenu sur le filtre d'une solution acide contenant les espèces cationiques du magnésium sous forme de chlorure de magnésium (MgCl₂), les espèces cationiques du fer sous forme de chlorure de fer (FeCl₂) et l'acide chlorhydrique non consommé en solution aqueuse. Le solide formé de silice amorphe est lavé avec 250 mL d'eau, séché puis pesé. On obtient une masse de silice de 35 g.

Par distillation sous pression réduite de la solution acide, on récupère 140 g de chlorure d'hydrogène en solution aqueuse et on forme un concentré du fer et du magnésium sous la forme de chlorures dans une solution aqueuse d'acide chlorhydrique résiduel. On ajoute à ce concentré de chlorure de fer et de chlorure de magnésium, la solution de lavage du résidu de distillation, préalablement collectée, puis 3 g de MgO sous la forme d'une suspension aqueuse de façon que le pH de la solution atteigne une valeur de l'ordre de 6 et que les espèces cationiques du fer précipitent sous la forme d'hydroxydes de fer.

Par filtration, séchage du résidu retenu sur le filtre puis pesée on obtient 1,2 g d'hydroxyde de fer. On traite par évaporation sous pression réduite la solution obtenue à l'issue de la filtration. 155 g de MgCl₂, 6H₂O cristallisent avec une pureté de l'ordre de 95%.

Le traitement de 100 g de flocage d'amiante avec 196 g d'acide chlorhydrique en solution dans l'eau fournit 155 g de chlorure de magnésium hydraté, 1,2 g d'hydroxyde de fer, 35 g de silice amorphe et 12 g de sulfate de calcium du liant hydraulique. En outre, 56 g d'acide chlorhydrique ont été consommés et 140 g d'acide chlorhydrique ont été recyclés à l'issue de ce traitement de déchet issu de flocage d'amiante.

## Revendications

1. Procédé de traitement d'une matière solide, dite solide amianté (1), contenant au moins une quantité d'amiante, **caractérisé en ce que** ; ledit procédé comprend au moins une étape de traitement, dit traitement acide à chaud (4), de l'amiante du solide amianté (1) à pression atmosphérique par une solution aqueuse (5) d'acide chlorhydrique à une température voisine de la température d'ébullition de la solution aqueuse (5) d'acide chlorhydrique, de façon à obtenir :
- une solution, dite solution non silicique (8), d'au moins un constituant non silicique de l'amiante dans la solution aqueuse (5) d'acide chlorhydrique et,
- un solide, dit solide silicique (9),
et **en ce qu'**on soumet la solution non silicique (8) à un traitement, dit traitement de précipitation (13), dans lequel on réalise une précipitation sélective des espèces cationiques du fer, présentes dans cette solution non silicique (8).

2. Procédé selon la revendication 1, **caractérisé en ce qu'**on réalise le traitement de précipitation (13) en ajustant le pH de la solution non silicique (8) à une valeur comprise entre pH 5 et pH 7, notamment à une valeur de l'ordre de pH 6.

3. Procédé selon l'une des revendications 1 et 2, **caractérisé en ce que** le traitement de précipitation (13) consiste en un ajout, dans la solution non silicique (8), d'une quantité d'au moins un composé, dit composé basique (12), susceptible d'augmenter la concentration en ions hydroxydes dans la solution non silicique (8).

4. Procédé selon la revendication 3, **caractérisé en ce qu'**on choisit le composé basique (12) dans le groupe formé des oxydes des métaux alcalino-terreux, des hydroxydes des métaux alcalins et des hydroxydes des métaux alcalino-terreux.

5. Procédé selon l'une des revendications 3 et 4, **caractérisé en ce que** le composé basique (12) est choisit dans le groupe formé de l'oxyde de magnésium sec et de l'hydroxyde de magnésium.

6. Procédé selon l'une des revendications 1 à 5, **caractérisé en ce que** lors du traitement acide à chaud (4), on prépare une suspension du solide amianté (1) dans la solution aqueuse (5) d'acide chlorhydrique et on chauffe la suspension du solide amianté (1) dans la solution aqueuse (5) d'acide chlorhydrique à une température comprise entre 70°C et 110°C, notamment de l'ordre de 95°C.

7. Procédé selon la revendication 6, **caractérisé en ce que**, lors du traitement acide à chaud (4), on chauffe la suspension du solide amianté (1) dans la solution aqueuse (5) d'acide chlorhydrique pendant une durée comprise entre 30 min et 300 min, notamment de l'ordre de 150 min.

8. Procédé selon l'une des revendications 1 à 7, **caractérisé en ce que** la concentration d'acide chlorhydrique dans la solution aqueuse (5) d'acide chlorhydrique d'un traitement acide à chaud (4) est supérieure à 100 g/L, notamment comprise entre 100 g/L et 150 g/L.

9. Procédé selon l'une des revendications 1 à 8, **caractérisé en ce qu'**on réalise le traitement acide à chaud (4) à partir d'un solide amianté (1) présentant une granulométrie inférieure à 20 mm, notamment comprise entre 1 mm et 10 mm.

10. Procédé selon l'une des revendications 1 à 9, **caractérisé en ce que** le traitement acide à chaud (4) est adapté pour que la solution non silicique (8) reste exempte de composé silicique.

11. Procédé selon l'une des revendications 1 à 10, **caractérisé en ce que**, préalablement au traitement de précipitation (13), on réalise une séparation solide/liquide (7) du solide silicique (9) et de la solution non silicique (8).

12. Procédé selon l'une des revendications 1 à 11, **caractérisé en ce que** après l'étape de précipitation (13), on réalise une séparation solide/liquide (15) d'un précipité (16) formé des espèces cationiques du fer et d'une solution résiduelle, dite solution magnésienne (17), contenant une quantité d'au moins une espèce ionique du magnésium.

13. Procédé selon l'une des revendications 1 à 12, **caractérisé en ce que** le solide amianté (1) est de l'amiante pur auquel on applique ledit traitement acide à chaud (4).

14. Procédé selon l'une des revendications 1 à 13, **caractérisé en ce que** le solide amianté (1) étant un déchet amianté contenant une proportion massique d'amiante comprise entre 10% et 15%, préalablement au traitement acide à chaud (4), on réalise une séparation (41) de l'amiante (3) dudit déchet amianté.

15. Procédé selon la revendication 14, **caractérisé en ce que** pour la séparation (41) de l'amiante (3) du déchet amianté, on réalise au moins un traitement, dit traitement acide à froid (32), dans lequel on plonge le déchet amianté dans une solution aqueuse contenant de l'acide chlorhydrique à une concentration supérieure à 200 g/L, notamment de l'ordre de 250 g/L, à température ambiante et à pression atmosphérique, et on incube le mélange sous agitation pendant une durée supérieure à 1 h, notamment comprise entre 2 h et 3 h.

## Claims

1. Process for the treatment of a solid material, called asbestos-containing solid (1), containing at least a quantity of asbestos, **characterised in that**:
said process comprises at least one step of treatment, called hot acid treatment (4), of the asbestos of the asbestos-containing solid (1) at atmospheric pressure with an aqueous solution (5) of hydrochloric acid at a temperature close to the boiling temperature of the aqueous solution (5) of hydrochloric acid, so as to obtain:
- a solution, called non-silicic solution (8), of at least one non-silicic constituent of the asbestos in the aqueous solution (5) of hydrochloric acid and
- a solid, called silicic solid (9),
and **in that** the non-silicic solution (8) is subjected to a treatment, called precipitation treatment (13), in which selective precipitation of the cationic species of iron that are present in the non-silicic solution (8) is carried out.

2. Process according to claim 1, **characterised in that** the precipitation treatment (13) is carried out by adjusting the pH of the non-silicic solution (8) to a value of from pH 5 to pH 7, especially to a value of approximately pH 6.

3. Process according to either claim 1 or claim 2, **characterised in that** the precipitation treatment (13) consists in adding to the non-silicic solution (8) a quantity of at least one compound, called basic compound (12), capable of increasing the concentration of hydroxide ions in the non-silicic solution (8).

4. Process according to claim 3, **characterised in that** the basic compound (12) is chosen from the group formed of alkaline earth metal oxides, alkali metal hydroxides and alkaline earth metal hydroxides.

5. Process according to either claim 3 or claim 4, **characterised in that** the basic compound (12) is chosen from the group formed of dry magnesium oxide and magnesium hydroxide.

6. Process according to any one of claims 1 to 5, **characterised in that**, in the hot acid treatment (4), a suspension of the asbestos-containing solid (1) in the aqueous solution (5) of hydrochloric acid is prepared and the suspension of the asbestos-containing solid (1) in the aqueous solution (5) of hydrochloric acid is heated to a temperature of from 70°C to 110°C, especially approximately 95°C.

7. Process according to claim 6, **characterised in that**, in the hot acid treatment (4), the suspension of the asbestos-containing solid (1) in the aqueous solution (5) of hydrochloric acid is heated for a period of time of from 30 minutes to 300 minutes, especially approximately 150 minutes.

8. Process according to any one of claims 1 to 7, **characterised in that** the concentration of hydrochloric acid in the aqueous solution (5) of hydrochloric acid of a hot acid treatment (4) is greater than 100 g/l, especially from 100 g/l to 150 g/l.

9. Process according to any one of claims 1 to 8, **characterised in that** the hot acid treatment (4) is carried out starting from an asbestos-containing solid (1) having a particle size less than 20 mm, especially from 1 mm to 10 mm.

10. Process according to any one of claims 1 to 9, **characterised in that** the hot acid treatment (4) is adapted so that the non-silicic solution (8) remains free of silicic compound.

11. Process according to any one of claims 1 to 10, **characterised in that**, prior to the precipitation treatment (13), a solid/liquid separation (7) of the silicic solid (9) and of the non-silicic solution (8) is carried out.

12. Process according to any one of claims 1 to 11, **characterised in that**, after the precipitation step (13), a solid/liquid separation (15) of a precipitate (16) formed by the cationic iron species and of a residual solution, called magnesium-containing solution (17), containing a quantity of at least one ionic species of magnesium, is carried out.

13. Process according to any one of claims 1 to 12, **characterised in that** the asbestos-containing solid (1) is pure asbestos to which said hot acid treatment (4) is applied.

14. Process according to any one of claims 1 to 13, **characterised in that** the asbestos-containing solid (1) is asbestos-containing waste containing a proportion by mass of asbestos of from 10% to 15% and, prior to the hot acid treatment (4), a separation (41) of the asbestos (3) from said asbestos-containing waste is carried out.

15. Process according to claim 14, **characterised in that**, for the separation (41) of the asbestos (3) from the asbestos-containing waste, at least one treatment, called cold acid treatment (32), is carried out, in which the asbestos-containing waste is immersed in an aqueous solution containing hydrochloric acid in a concentration greater than 200 g/l, especially of approximately 250 g/l, at ambient temperature and at atmospheric pressure, and the mixture is incubated, with stirring, for a period of time greater than 1 hour, especially from 2 hours to 3 hours.

## Patentansprüche

1. Verfahren zur Behandlung eines festen Stoffs, bezeichnet als asbesthaltiger Feststoff (1), der wenigstens eine Asbestmenge enthält, **dadurch gekennzeichnet, dass** das genannte Verfahren wenigstens eine Behandlungsstufe, bezeichnet als Säure-Heißbehandlung (4) des Asbests des asbesthaltigen Feststoffs (1) unter atmosphärischem Druck durch eine wässrige Lösung (5) aus Salzsäure bei einer Temperatur umfasst, die der Siedetemperatur der wässrigen Lösung (5) aus Salzsäure nahe kommt, so dass Folgendes erhalten wird:
- eine Lösung, bezeichnet als nicht kieselhaltige Lösung (8) aus wenigstens einem nicht kieselhaltigen Bestandteil des Asbests in der wässrigen Lösung (5) aus Salzsäure und
- einen Feststoff, bezeichnet als kieselhaltiger Feststoff (9),
und dass die nicht kieselhaltige Lösung (8) einer Behandlung, bezeichnet als Fällungsbehandlung (13), unterzogen wird, in der eine selektive Fällung der kationischen Sorten des Eisens realisiert wird, die in dieser nicht kieselhaltigen Lösung (8) vorhanden sind.

2. Verfahren gemäß Anspruch 1, **dadurch gekennzeichnet, dass** die Fällungsbehandlung (13) unter Anpassung des ph-Wertes der nicht kieselhaltigen Lösung (8) an einen Wert realisiert wird, der zwischen einem ph-Wert von 5 und einem ph-Wert von 7, insbesondere einem ph-Wert in der Größenordnung von 6 inbegriffen ist.

3. Verfahren gemäß Anspruch 1 und 2, **dadurch gekennzeichnet, dass** die Fällungsbehandlung (13) aus einem Zusatz einer Menge aus wenigstens einer Verbindung, bezeichnet als basische Verbindung (12), die geeignet ist, die Konzentration an Hydroxidionen in der nicht kieselhaltigen Lösung (8) zu erhöhen, in der nicht kieselhaltigen Lösung (8) besteht.

4. Verfahren gemäß Anspruch 3, **dadurch gekennzeichnet, dass** die basische Verbindung (12) aus der Gruppe ausgewählt ist, die aus den Oxiden von alkalisch-erdhaltigen Metallen, den Hydroxiden von alkalischen Metallen und den Hydroxiden von alkalischerdhaltigen Metallen gebildet sind.

5. Verfahren gemäß Anspruch 3 und 4, **dadurch gekennzeichnet, dass** die basische Verbindung (12) aus der Gruppe ausgewählt ist, die aus trockenem Magnesiumoxid und Magnesiumhydroxid gebildet ist.

6. Verfahren gemäß Anspruch 1 bis 5, **dadurch gekennzeichnet, dass** bei der Säure-Heißbehandlung (4) eine Suspension des asbesthaltigen Feststoffs (1) in der wässrigen Lösung (5) aus Salzsäure zubereitet wird und dass die Suspension des asbesthaltigen Feststoffs (1) in der wässrigen Lösung (5) aus Salzsäure auf eine zwischen 70°C und 110°C, insbesondere in der Größenordnung von 95°C, inbegriffene Temperatur erhitzt wird.

7. Verfahren gemäß Anspruch 6, **dadurch gekennzeichnet, dass** bei der Säure-Heißbehandlung (4) die Suspension des asbesthaltigen Feststoffs (1) in der wässrigen Lösung (5) aus Salzsäure während einer zwischen 30 Min. und 300 Min., insbesondere in der Größenordnung von 150 Min., inbegriffenen Dauer erhitzt wird.

8. Verfahren gemäß Anspruch 1 bis 7, **dadurch gekennzeichnet, dass** die Salzsäurekonzentration in der wässrigen Lösung (5) aus Salzsäure einer Säure-Heißbehandlung (4) höher ist als 100 g/l, insbesondere zwischen 100 g/l und 150 g/l inbegriffen ist.

9. Verfahren gemäß Anspruch 1 bis 8, **dadurch gekennzeichnet, dass** die Säure-Heißbehandlung (4) ausgehend von einem asbesthaltigen Feststoff (1), der eine Korngröße von weniger als 20 mm, die insbesondere zwischen 1 mm und 10 mm inbegriffen ist, aufweist, realisiert wird.

10. Verfahren gemäß Anspruch 1 bis 9, **dadurch gekennzeichnet, dass** die Säure-Heißbehandlung (4) angepasst ist, damit die nicht kieselhaltige Lösung (8) von der kieselhaltigen Verbindung frei bleibt.

11. Verfahren gemäß Anspruch 1 bis 10, **dadurch gekennzeichnet, dass** vor der Fällungsbehandlung (13) eine Trennung Feststoff / Flüssigkeit (7) des kieselhaltigen Feststoffs (9) und der nicht kieselhaltigen Lösung (8) erfolgt.

12. Verfahren gemäß Anspruch 1 bis 11, **dadurch gekennzeichnet, dass** nach der Fällungsstufe (13) eine Trennung Feststoff / Flüssigkeit (15) einer Fällung (16) realisiert wird, die aus den kationischen Sorten des Eisens und einer Restlösung, bezeichnet als magnesiumhaltige Lösung (17), die eine Menge von wenigstens einer ionischen Sorte des Magnesiums enthält, realisiert wird.

13. Verfahren gemäß Anspruch 1 bis 12, **dadurch gekennzeichnet, dass** der asbesthaltige Feststoff (1) reines Asbest ist, auf das die genannte Säure-Heißbehandlung (4) angewendet wird.

14. Verfahren gemäß Anspruch 1 bis 13, **dadurch gekennzeichnet, dass** der asbesthaltige Feststoff (1) ein asbesthaltiger Abfall ist, der einen zwischen 10 % und 15 % inbegriffenen Massenanteil an Asbest enthält, und vor der Säure-Heißbehandlung (4) eine Trennung (41) des Asbests (3) des genannten asbesthaltigen Abfalls realisiert wird.

15. Verfahren gemäß Anspruch 14, **dadurch gekennzeichnet, dass** die Trennung (41) des Asbests (3) des asbesthaltigen Abfalls wenigstens eine Behandlung, bezeichnet als Säure-Kaltbehandlung (32) realisiert wird, in der der asbesthaltige Abfall in eine wässrige Lösung, die die Salzsäure in einer höheren Konzentration als 200 g/l, insbesondere in der Größenordnung von 250 g/l, enthält, bei Raumtemperatur und unter atmosphärischem Druck getaucht wird und die Mischung unter Schütteln während einer Dauer von mehr als 1 Stunde, die insbesondere zwischen 2 Stunden und 3 Stunden inbegriffen ist, inkubiert wird.
